# EUROPEAN PATENT APPLICATION

(11) **EP 4 585 654 A1**
(43) Date of publication of application: **16.07.2025**
(21) Application number: 23870261.7
(22) Date of filing: 08.09.2023
(51) Int. Cl.: C08L 101/12, C08K 7/14, C08K 7/00, C08K 3/34, B29C 48/285

(54) **LIQUID CRYSTAL POLYMER COMPOSITION, PREPARATION METHOD THEREFOR, AND USE THEREOF**

(30) Priority: 30.09.2022 CN 202211213811
(71) Applicant: KINGFA SCI. & TECH. CO., LTD., Guangzhou, Guangdong 510663 (CN); ZHUHAI VANTEQUE SPECIALTY ENGINEERING PLASTICS CO., LTD., Guangdong 519050 (CN)
(72) Inventor: ZHOU, Guangliang, Guangzhou, Guangdong 510663 (CN); CHEN, Pingxu, Guangzhou, Guangdong 510663 (CN); YE, Nanbiao, Guangzhou, Guangdong 510663 (CN); SONG, Caifei, Guangzhou, Guangdong 510663 (CN); LIU, Yao, Guangzhou, Guangdong 510663 (CN); XIAO, Zhongpeng, Guangzhou, Guangdong 510663 (CN); JIANG, Sujun, Guangzhou, Guangdong 510663 (CN)
(74) Representative: Meyer, Thorsten
(86) International application number: PCT/CN2023/117734
(87) International publication number: WO 2024/067022

(57) **Abstract**

Provided are a liquid crystal polymer-based composition and a preparation method and use thereof. The composition includes in parts by weight: 100 parts of an LCP resin, 10-80 parts of a fibrous filler, and 15-80 parts of a sheet-like filler; a mass ratio of the fibrous filler to the sheet-like filler is (0.2-2):1; in the fibrous filler, a weight percentage of a fibrous filler with a retained length of less than or equal to 100 µm is higher than or equal to 50%, and a weight percentage of a fibrous filler with a retained length of more than or equal to 250 µm is 1% to 5%; the sheet-like filler consists of a small sheet-like filler with a particle size D50 of 2.5 µm to 4.5 µm and a large sheet-like filler with a particle size D50 of 48 µm to 70 µm in a mass ratio of (0.5-2):1. In the present disclosure, fibrous fillers with different retained lengths are interwoven with each other to form an interwoven structure. In combination with the small sheet-like filler, the fibrous filler distributed in the interwoven structure can effectively improve a difference between the shrinkage in a transverse direction (TD) and the shrinkage in a machine direction (MD) for the LCP-based composition while achieving the uniform dispersion of the large sheet-like filler, and effectively solves the problems caused by the agglomeration of sheet-like fillers.

## Description

### TECHNICAL FIELD

The present disclosure relates to the technical field of compositions of high polymers, and specifically relates to a liquid crystal polymer-based composition and a preparation method and use thereof.

### BACKGROUND

Liquid crystal polymers (LCPs) possess excellent thermal resistance, fluidity, dimensional stability, self-flame retardancy, etc. Thus, LCPs are widely used in small and precision electronic components such as electronic connectors, coil bobbins, and relays. Moreover, with the advancement of electronics technology, the electronic connectors on printed circuit boards (PCBs) are increasingly thin-walled, integrated, and functionally complicated.

LCP materials exhibit many performance advantages in the preparation of precision electronic connectors. However, LCP has a rigid rod-like molecular chain structure. After the injection molding of LCP, especially when LCP is prepared into an elongated product (such as FPC/DDR/BtoB), the rigid rod-like molecular chain structure is in a highly oriented state, which results in a very significant difference between the shrinkage in an orientation direction (machine direction (MD)) and a transverse direction (TD) and thus causes defects such as large variation of peripheral dimension and diagonal distortion/deformation for a product.

In the existing technologies, LCP composites with excellent dimensional stability are produced mainly by adding sheet-like fillers. However, due to the high rigidity and low polarity of an LCP molecular chain and the poor wettability between LCP and an inorganic filler, it is extremely difficult to disperse an inorganic filler evenly in an LCP system, and large-sized agglomerates are produced, which leads to issues such as gate blockage, short shot, and white spots on a surface of a product.

### SUMMARY

A first objective of the present disclosure is to overcome the deficiency that the existing sheet-like filler can hardly be evenly dispersed when used for modifying LCP and to provide an LCP-based composition. In the LCP-based composition, a specific fibrous filler is used in combination with a small sheet-like filler to enhance the uniform dispersion of a large sheet-like filler in an LCP resin, which can reduce the molding issues such as gate blockage and short shot and the surface defects such as white spots caused by the agglomeration of large sheet-like fillers while improving a difference between the shrinkage in TD and the shrinkage in MD.

A second objective of the present disclosure is to provide a preparation method of the LCP-based composition.

A third objective of the present disclosure is to provide a use of the LCP-based composition in preparation of a thin-walled electronic connector.

A fourth objective of the present disclosure is to provide a thin-walled electronic connector prepared with a raw material containing the LCP-based composition.

The above objectives of the present disclosure are achieved through the following technical solutions:

An LCP-based composition is provided, including the following components in parts by weight:
100 parts of an LCP resin;
10 parts to 80 parts of a fibrous filler; and
15 parts to 80 parts of a sheet-like filler,
where a mass ratio of the fibrous filler to the sheet-like filler is (0.2-2): 1;
in the fibrous filler, a weight percentage of a fibrous filler with a retained length of less than or equal to 100 µm is higher than or equal to 50% and a weight percentage of a fibrous filler with a retained length of more than or equal to 250 µm is 1% to 5%; and
the sheet-like filler consists of a small sheet-like filler with a particle size D50 of 2.5 µm to 4.5 µm and a large sheet-like filler with a particle size D50 of 48 µm to 70 µm in a mass ratio of (0.5-2): 1.

In the present disclosure, a mixture of a specific fibrous filler, small sheet-like filler, and large sheet-like filler in a specific ratio is adopted as an inorganic filler, and a content of a fibrous filler with a retained length of less than or equal to 100 µm and a content of a fibrous filler with a retained length of greater than or equal to 250 µm in the LCP-based composition are controlled, such that the fibrous fillers with different retained lengths and the small sheet-like filler together improve the dispersion of the large sheet-like filler in the LCP-based composition. The fibrous fillers with different retained lengths are interwoven with each other to form an interwoven structure, which is conducive to reducing the tendency of agglomeration of the large sheet-like filler. The small sheet-like filler can be filled among the large sheet-like filler layers to disrupt the original agglomerates and make the LCP resin infiltrate among the large sheet-like filler layers, thereby achieving the uniform dispersion of the large sheet-like filler. In addition, the fibrous filler distributed in an interwoven structure can effectively inhibit the orientation of uniform molecular chains of the LCP resin. In combination with the uniformly dispersed sheet-like fillers, the fibrous filler distributed in the interwoven structure can effectively improve the shrinkage difference between TD and MD for the LCP-based composition and effectively solve the problems caused by the agglomeration of the sheet-like fillers.

Preferably, the mass ratio of the fibrous filler to the sheet-like filler is 0.3 to 1.7 (i.e., (0.3 to 1.7): 1).

In some embodiments, the sheet-like filler of the present disclosure may be a mica powder and/or a talcum powder.

In some embodiments, the large sheet-like filler of the present disclosure is the mica powder, and the small sheet-like filler of the present disclosure is the talcum powder.

In some embodiments, the LCP resin of the present disclosure has a melting point Tm of 350±10°C.

In some embodiments, the fibrous filler of the present disclosure has an average diameter of 5 µm to 20 µm.

Specifically, in the fibrous filler, the weight percentage of the fibrous filler with the retained length of less than or equal to 100 µm is 51% to 91%.

The present disclosure also discloses a preparation method of the LCP-based composition, including the following steps:

feeding the LCP resin through a main feeding port of a twin-screw extruder, feeding the fibrous filler and the sheet-like filler through a side feeding port of the twin-screw extruder, and conducting melt extrusion and granulation at Tm ±30 °C to produce the LCP-based composition, where the Tm represents the melting point of the LCP resin.

In the preparation method of the LCP-based composition of the present disclosure, a retained length and a content distribution for fibers in the final LCP-based composition are controlled mainly by changing a position where the fibrous filler is feeded. A particle size and an addition amount of the sheet-like filler will also affect the retained length and content distribution for fibers in the LCP-based composition to some extent.

The present disclosure also discloses a use of the LCP-based composition in preparation of a thin-walled electronic component.

The present disclosure also discloses a thin-walled electronic connector prepared with a raw material containing the LCP-based composition.

Compared with the prior art, the present disclosure has the following beneficial effects:

In the LCP-based composition of the present disclosure, a mixture of a specific fibrous filler, small sheet-like filler, and large sheet-like filler in a specific ratio is adopted as an inorganic filler, and the contents of fibrous fillers with different retained lengths in the LCP-based composition are controlled, such that the fibrous fillers with different retained lengths and the small sheet-like filler together improve the dispersion of the large sheet-like filler in the LCP-based composition. In addition, the shrinkage difference between TD and MD for the LCP-based composition can be effectively mitigated. A ratio α of a shrinkage ratio in TD to a shrinkage ratio in MD ranges from 4.1 to 9.7, and the dispersion uniformity of the fillers reaches a grade B or higher.

### DETAILED DESCRIPTION

The present disclosure is further described below with reference to the specific embodiments, but these embodiments are not intended to limit the present disclosure in any form. Unless otherwise stated, the raw material reagents adopted in the embodiments of the present disclosure are purchased conventionally.

### 1. Raw material reagents

LCP resin: The LCP resin has a melting point Tm of 350±10°C, and is manufactured by the Zhuhai Vanteque Specialty Engineering Plastics Co., Ltd., with a product designation of Vicryst R800.

Glass fiber A: The glass fiber A has an average diameter of 10 µm and an initial average length of 3 mm, and is manufactured by the Owens Corning, with a product designation of 923.

Glass fiber B: The glass fiber B has an average diameter of 6 µm and an initial average length of 3 mm, and is manufactured by the Owens Corning, with a product designation of FT771.

Sheet-like filler A: The sheet-like filler A is a mica powder with a particle size D50 of 48 µm, which is manufactured by the GeRui Mining Co., Ltd. and has a product designation of GM-5.

Sheet-like filler B: The sheet-like filler B is a mica powder with a particle size D50 of 70 µm, which is manufactured by the GeRui Mining Co., Ltd. and has a product designation of GP-100.

Sheet-like filler C: The sheet-like filler C is a mica powder with a particle size D50 of 24 µm, which is manufactured by the Yamaguchi Mica Co., Ltd. and has a product designation of AB-25S.

Sheet-like filler D: The sheet-like filler D is a talcum powder with a particle size D50 of 2.5 µm, which is manufactured by the Longsheng Huamei Talc Development Co., Ltd. and has a product designation of AH-3000.

Sheet-like filler E: The sheet-like filler E is a talcum powder with a particle size D50 of 4.5 µm, which is manufactured by the Liaoning Aihai Talc Co., Ltd. and has a product designation of AH 51215.

Sheet-like filler F: The sheet-like filler F is a talcum powder with a particle size D50 of 6 µm, which is manufactured by the Liaoning Aihai Talc Co., Ltd. and has a product designation of AH 51220.

2. The LCP-based compositions in the examples and comparative examples of the present disclosure each was prepared by the following preparation method:
S1. Components were weighed according to proportions in a formula.
S2. A processing temperature of a twin-screw extruder was set to 320°C to 380°C.
S3. An LCP resin was fed through a main feeding port of the twin-screw extruder.
S4. A fibrous filler and a sheet-like filler were fed through a side feeding port of the twin-screw extruder. Fibrous fillers with different lengths and content distributions were produced primarily by adjusting a position at which the fibrous filler was fed to a screw of the twin-screw extruder. A particle size and an addition amount of the sheet-like filler also affected a retained length and a content distribution for fibers in an LCP-based composition to some extent.
S5. Blending modification was conducted by the twin-screw extruder with a specific screw combination and configuration to produce a melt, and the melt was extruded through a die to produce a strip material, cooled in a water bath, drawn to a granulator, and granulated to finally produce a homogeneous LCP-based composite.

### 3. Performance testing

### (1) Retained lengths and weight percentages of glass fibers

A specific testing method was as follows: An LCP-based composite obtained from the twin-screw extruder was taken, and an ash was prepared from the LCP-based composite according to ISO 3451-1. The ash was added to 100 mL of industrial alcohol with a concentration of 95% and dispersed with an ultrasound machine for 2 min to produce an ash solution. Then, 2 mL of the ash solution was pipetted by a pipette from a bottom, placed on a clean glass slide, and photographed by an optical microscope at an amplification of 500 ×. A retained length of a glass fiber was calculated by a statistical method, and 1,000 glass fibers were randomly selected and measured. A total length (L₁) of glass fibers with lengths below or above a specific length and a total length (L₀) of all glass fibers were calculated. Since a diameter and a density of a glass fiber were fixed, a weight percentage of glass fibers with lengths below or above the specific length was calculated as follows: L₁/L₀ × 100%.

### (2) A ratio α of a shrinkage ratio in TD to a shrinkage ratio in MD

A specific testing method was as follows: An LCP-based composite obtained from the twin-screw extruder was taken, and a single-screw injection-molding machine was used to prepare 20 sample plates from the LCP-based composite through injection molding in a single-gate mold (sample dimension: length in MD: 70 mm, width in TD: 30 mm, and thickness: 1.5 mm).

An actual length of a sample plate in TD was measured by a two-dimension measuring instrument, and a ratio of the actual length to a theoretical length of a mold adopted was a shrinkage ratio in TD. An average value of shrinkage ratios in TD for the 20 sample plates was denoted as Y. Then, an actual length of a sample plate in MD was measured by a two-dimension measuring instrument, and a ratio of the actual length to a theoretical length of a mold adopted was a shrinkage ratio in MD. An average value of shrinkage ratios in MD for the 20 sample plates was denoted as X.

Finally, a ratio of a shrinkage ratio in TD to a shrinkage ratio in MD could be calculated according to the formula of α = Y/X.

### (3) Dispersion uniformity of fillers

A specific testing method was as follows: An LCP-based composite obtained from the twin-screw extruder was taken, and 20 square sample plates each of 64 mm * 64 mm * 0.8 mm were prepared by a single-screw injection-molding machine.

Then, under an optical microscope at an amplification of 200 ×, sizes and numbers of white spots on front and back surfaces of each sample plate were counted.

Finally, the dispersion uniformity of fillers was evaluated according to the following determination criteria:
grade A: a number of white spots with a size of 0.2 mm or more is less than or equal to 1;
grade B: a number of white spots with a size of 0.2 mm or more is larger than 1 and less than or equal to 10;
grade C: a number of white spots with a size of 0.2 mm or more is larger than 10 and less than or equal to 30; and
grade D: a number of white spots with a size of 0.2 mm or more is larger than 30.

### Examples 1 to 14

Components in each of the LCP-based compositions in Examples 1 to 14 were in parts by weight shown in Table 1. M1 was a mass ratio of a fibrous filler to a sheet-like filler, M2 was a mass ratio of a small sheet-like filler to a large sheet-like filler, N was a weight percentage of a fibrous filler with a retained length of less than or equal to 100 µm in the fibrous filler, and Z was a weight percentage of a fibrous filler with a retained length of more than or equal to 250 µm in the fibrous filler.

**Table 1 LCP-based compositions in Examples 1 to 14**

| Componen t | Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| LCP | 100 | 100 | 100 | 100 | 100 | 100 | 100 | 100 | 100 | 100 | 100 | 100 | 100 | 100 |
| Glass fiber A | 55 | / | 55 | 55 | 55 | 55 | 60 | 22 | 10 | 80 | 17 | 63 | 55 | 55 |
| Glass fiber B | / | 55 | / | / | / | / | / | / | / | / | / | | / | / |
| Sheet-like filler A | 20 | 20 | 14 | 26 | / | 20 | 17. 5 | 11 | 7.5 | 40 | 39 | 16 | 20 | 20 |
| Sheet-like filler B | / | / | / | / | 20 | / | / | / | / | / | / | / | / | / |
| Sheet-like filler D | 20 | 20 | 26 | 14 | / | / | 17. 5 | 11 | 7.5 | 40 | 39 | 16 | 20 | 20 |
| Sheet-like filler E | / | / | / | / | 20 | 20 | / | / | / | / | / | / | / | / |
| M1 | 1.3 8 | 1.3 8 | 1.3 8 | 1.3 8 | 1.3 8 | 1.3 8 | 1.7 1 | 1.0 0 | 0.6 7 | 1.0 0 | 0.2 2 | 1.9 7 | 1.3 8 | 1.3 8 |
| M2 | 1.0 0 | 1.0 0 | 1.8 6 | 0.5 4 | 1.0 0 | 1.0 0 | 1.0 0 | 1.0 0 | 1.0 0 | 1.0 0 | 1.0 0 | 1.0 0 | 1.0 0 | 1.0 0 |
| N/% | 65. 5 | 64. 4 | 64. 2 | 66. 3 | 66. 8 | 66. 5 | 64. 7 | 66. 5 | 66. 9 | 64. 2 | 66. 5 | 64. 4 | 90. 2 | 51. 2 |
| Z/% | 3.3 | 3.8 | 3.7 | 3.2 | 3.1 | 3.0 | 4.1 | 3.1 | 3.2 | 3.9 | 3.1 | 3.8 | 1.3 | 4.8 |

### Comparative Examples 1 to 9

Components in each of the LCP-based compositions in Comparative Examples 1 to 9 were in parts by weight shown in Table 2. M1 was a mass ratio of a fibrous filler to a sheet-like filler, M2 was a mass ratio of a small sheet-like filler to a large sheet-like filler, N was a weight percentage of a fibrous filler with a retained length of less than or equal to 100 µm in the fibrous filler, and Z was a weight percentage of a fibrous filler with a retained length of more than or equal to 250 µm in the fibrous filler.

**Table 2 LCP-based compositions in Comparative Examples 1 to 9**

| Component | Comparative Example | | | | | | | | |
|---|---|---|---|---|---|---|---|---|---|
| | 1 | 2 | 3 | 4 | 5 | 6 | 7 | 8 | 9 |
| LCP | 100 | 100 | 100 | 100 | 100 | 100 | 100 | 100 | 100 |
| Glass fiber A | 15 | 68 | 55 | 55 | 55 | 55 | 55 | 55 | 55 |
| Sheet-like filler A | 40 | 13.5 | 30 | 11 | / | 20 | / | 20 | 20 |
| Sheet-like filler D | 40 | 13.5 | 10 | 29 | / | / | 20 | 20 | 20 |
| Sheet-like filler C | / | / | / | / | 20 | / | 20 | / | / |
| Sheet-like filler F | / | / | / | / | 20 | 20 | / | / | / |
| M1 | 0.19 | 2.52 | 1.38 | 1.38 | 1.38 | 1.38 | 1.38 | 1.38 | 1.38 |
| M2 | 1.00 | 1.00 | 0.33 | 2.64 | 1.00 | 1.00 | 1.00 | 1.00 | 1.00 |
| N/% | 66.5 | 65.1 | 65.6 | 64.6 | 64.4 | 65.3 | 64.1 | 46.8 | 100 |
| Z/% | 3.6 | 3.9 | 3.5 | 3.8 | 3.1 | 3.0 | 4.1 | 7.9 | 0 |

The performance of the LCP-based composition in each of the examples and comparative examples was tested according to the above-mentioned method, and test results were shown in Table 3.

**Table 3 Test results of the examples and comparative examples**

| Example | α | Dispersibility |
|---|---|---|
| Example 1 | 5.3 | A |
| Example 2 | 4.9 | A |
| Example 3 | 6.4 | B |
| Example 4 | 4.1 | B |
| Example 5 | 4.7 | A |
| Example 6 | 6.1 | A |
| Example 7 | 8.5 | A |
| Example 8 | 7.4 | A |
| Example 9 | 8.9 | A |
| Example 10 | 9.2 | B |
| Example 11 | 4.1 | B |
| Example 12 | 9.5 | A |
| Example 13 | 4.7 | B |
| Example 14 | 9.7 | A |
| Comparative Example 1 | 4.6 | C |
| Comparative Example 2 | 13.3 | A |
| Comparative Example 3 | 4.3 | D |
| Comparative Example 4 | 7.8 | C |
| Comparative Example 5 | 12.1 | D |
| Comparative Example 6 | 6.9 | C |
| Comparative Example 7 | 12.5 | D |
| Comparative Example 8 | 14.2 | A |
| Comparative Example 9 | 4.6 | D |

For the LCP-based composition of the present disclosure, a ratio α of a shrinkage ratio in TD to a shrinkage ratio in MD is 4.1 to 9.7, and the dispersion uniformity of fillers reaches a grade B or more. It can be seen from Example 1 and Comparative Example 1 that, when the sheet-like filler is added at an excessive amount, the dispersion uniformity of fillers will be reduced due to the agglomeration of the sheet-like filler. When the fibrous filler is added at an excessive amount, it is difficult to effectively improve a ratio α of a shrinkage ratio in TD to a shrinkage ratio in MD for LCP.

It can be seen from Example 1, Comparative Example 3, and Comparative Example 4 that, when the small sheet-like filler is added at a too-small amount, it is difficult for the small sheet-like filler to cooperate with fibrous fillers with different retained lengths to improve the dispersion uniformity of the large sheet-like filler. When the small sheet-like filler is added at a too-large amount, the excessive small sheet-like filler is easy to agglomerate, which is also not conducive to the dispersion of the large sheet-like filler.

It can be seen from Example 1 and Comparative Examples 5 to 7 that, when the condition that the particle size D50 of the small sheet-like filler is 2.5 µm to 4.5 µm and the condition that the particle size D50 of the large sheet-like filler is 48 µm to 70 µm cannot be both met, the fibrous filler and the small sheet-like filler generate a limited improvement effect for the dispersion uniformity of the large sheet-like filler. In addition, it can be seen from Example 1 and Comparative Example 8 that, when a content of a fibrous filler with a retained length of less than or equal to 100 µm in the fibrous filler is too low and a content of a fibrous filler with a retained length of more than or equal to 250 µm in the fibrous filler is too high, it is not conducive to reducing a ratio α of a shrinkage ratio in TD to a shrinkage ratio in MD for the LCP-based composition, which causes large variation of peripheral size and serious diagonal distortion/deformation for a product.

The above examples of the present disclosure are merely for clearly illustrating the present disclosure, and are not intended to limit the implementations of the present disclosure. Those of ordinary skill in the art may make modifications or variations in other different forms based on the above description. There are no need and no way to exhaust all implementations. Any modification, equivalent substitution, and improvement made within the spirit and principle of the present disclosure should fall within the protection scope of the claims of the present disclosure.

## Claims

1. A liquid crystal polymer (LCP)-based composition, comprising the following components in parts by weight:
100 parts of an LCP resin;
10 parts to 80 parts of a fibrous filler; and
15 parts to 80 parts of a sheet-like filler,
wherein a mass ratio of the fibrous filler to the sheet-like filler is (0.2-2):1;
in the fibrous filler, a weight percentage of a fibrous filler with a retained length of less than or equal to 100 µm is higher than or equal to 50% and a weight percentage of a fibrous filler with a retained length of more than or equal to 250 µm is 1% to 5%; and
the sheet-like filler consists of a small sheet-like filler with a particle size D50 of 2.5 µm to 4.5 µm and a large sheet-like filler with a particle size D50 of 48 µm to 70 µm in a mass ratio of (0.5-2):1.

2. The LCP-based composition according to claim 1, wherein the mass ratio of the fibrous filler to the sheet-like filler is 0.3 to 1.7.

3. The LCP-based composition according to claim 1, wherein the sheet-like filler is a mica powder and/or a talcum powder.

4. The LCP-based composition according to claim 3, wherein the large sheet-like filler is the mica powder and the small sheet-like filler is the talcum powder.

5. The LCP-based composition according to claim 1, wherein the LCP resin has a melting point Tm of 350±10°C.

6. The LCP-based composition according to claim 1, wherein the fibrous filler has an average diameter of 5 µm to 20 µm.

7. The LCP-based composition according to claim 1, wherein in the fibrous filler, the weight percentage of the fibrous filler with the retained length of less than or equal to 100 µm is 51% to 91%.

8. A preparation method of the LCP-based composition according to any one of claims 1 to 7, comprising the following steps:
feeding the LCP resin through a main feeding port of a twin-screw extruder, feeding the fibrous filler and the sheet-like filler through a side feeding port of the twin-screw extruder, and conducting melt extrusion and granulation at Tm ±30°C to produce the LCP-based composition, wherein the Tm represents the melting point of the LCP resin.

9. A use of the LCP-based composition according to any one of claims 1 to 7 in preparation of a thin-walled electronic connector.

10. A thin-walled electronic connector prepared with a raw material containing the LCP-based composition according to any one of claims 1 to 7.
